(19) Europäisches Patentamt
European Patent Office
Office européen des brevets

(11) Veröffentlichungsnummer: **0 544 159 A2**

(12) # EUROPÄISCHE PATENTANMELDUNG

(21) Anmeldenummer: **92119415.5**

(51) Int. Cl.[5]: **C08G 73/16**

(22) Anmeldetag: **13.11.92**

(30) Priorität: **26.11.91 DE 4138764**

(43) Veröffentlichungstag der Anmeldung: **02.06.93 Patentblatt 93/22**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Elbl-Weiser, Karin, Dr.**
**Panoramastrasse 39**
**W-3905 Schriesheim(DE)**
Erfinder: **Wolf, Peter, Dr.**
**Albrecht-Duerer-Ring 31a**
**W-6710 Frankenthal(DE)**

(54) **Hochtemparaturbeständige Blockcopolykondensate.**

(57) Hochtemperaturbeständige Blockcopolykondensate, enthaltend als wesentliche Komponenten

A) 50 bis 98 Gew.-% vollaromatische thermotrope Polyesterblöcke

B) 2 bis 50 Gew.-% Polyimidblöcke mit einem mittleren Molekulargewicht $\overline{M}_n$ (Zahlenmittel) von 1000 bis 30 000

und

C) 0 bis 100 Gew.-%, bezogen auf die Summe A) und B), faser- oder teilchenförmige Füllstoffe oder deren Mischungen.

EP 0 544 159 A2

Die vorliegende Erfindung betrifft hochtemperaturbeständige Blockcopolykondensate, enthaltend als wesentliche Komponenten

A) 50 bis 98 Gew.-% vollaromatische thermotrope Polyesterblöcke, aufgebaut aus

$a_{1)}$ 10 bis 90 mol-% wiederkehrenden Einheiten der Formel I

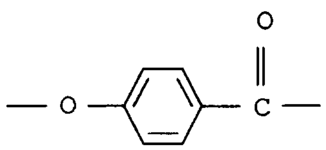

(I)

$a_{2)}$ 5 bis 45 mol-% einer Mischung aus

$a_{21)}$ 50 bis 100 mol-%, bezogen auf die Summe $a_{21)}$ + $a_{22)}$, wiederkehrenden Einheiten der Formel II

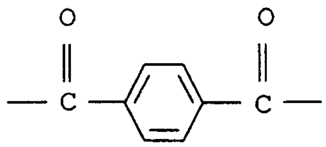

(II)

und

$a_{22)}$ 0 bis 50 mol-%, bezogen auf die Summe $a_{21)}$ + $a_{22)}$, wiederkehrenden Einheiten der Formel III

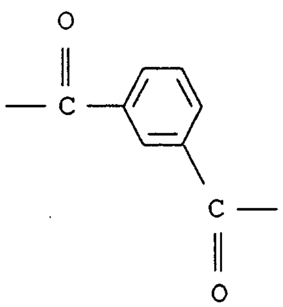

(III)

und

$a_{3)}$ 5 bis 45 mol-% einer Mischung aus

$a_{31)}$ 50 bis 100 mol-%, bezogen auf die Summe $a_{31)}$ + $a_{32)}$, mindestens einer der wiederkehrenden Einheiten IV bis VIII

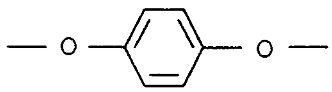

(IV)

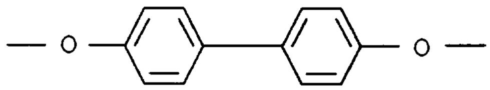

(V)

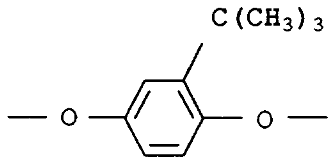

(VI)

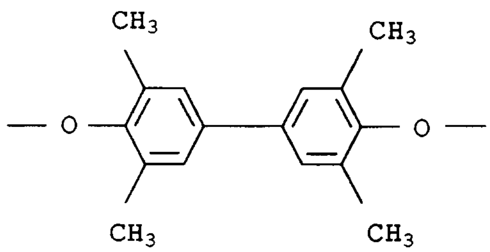

(VII)

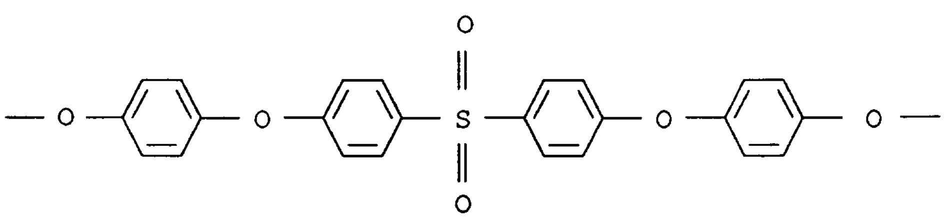

(VIII)

und

$a_{32)}$ 0 bis 50 mol-%, bezogen auf die Summe $a_{31)}$ + $a_{32)}$, mindestens einer der wiederkehrenden Einheiten der Formel IX bis XIII

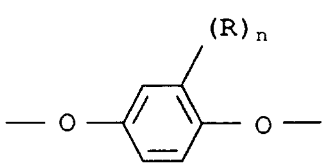

(IX)

wobei R einen Methyl- oder Phenylrest oder ein Chloratom darstellt und n den Wert 1, 2 oder 3 hat,

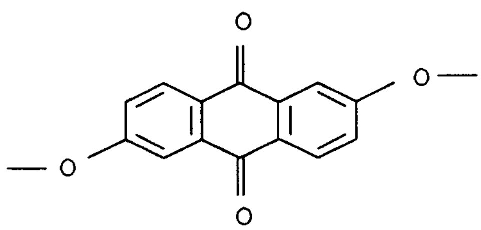

(X)

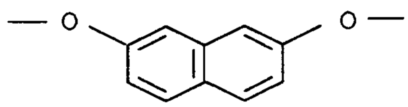

(XI)

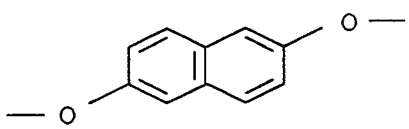

(XII)

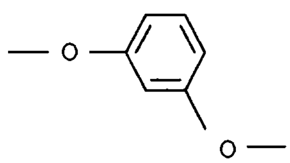

(XIII)

und wobei das molare Verhältnis der Komponenten $a_{2)}$ : $a_{3)}$ zwischen 0,9 : 1 und 1,1 : 1 liegt.

B) 2 bis 50 Gew.-% Polyimidblöcke mit einem mittleren Molekulargewicht $\overline{M}_n$ (Zahlenmittel) von 1000 bis 30 000, aufgebaut aus Einheiten der allgemeinen Formel XIV

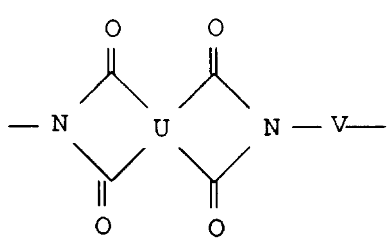

(XIV)

in der die Substituenten folgende Bedeutung haben:

U

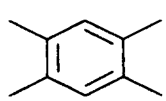 oder 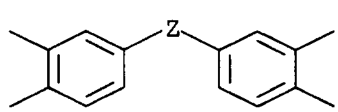 ,

Z chemische Bindung, —O- , —CO— , —S— , $—SO_2—$ , $—C(CH_3)_2—$ , $—Si(CH_3)_2—$ , $—C(CF_3)_2—$ ,

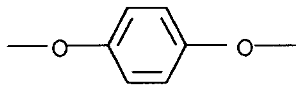

oder

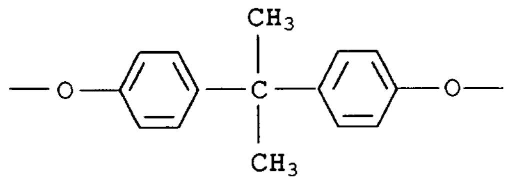

V m-Phenylen, p-Phenylen,

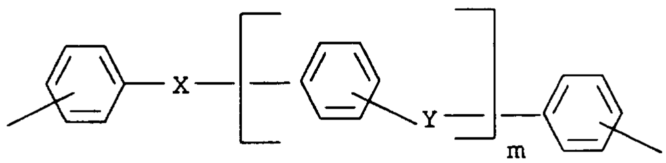

oder

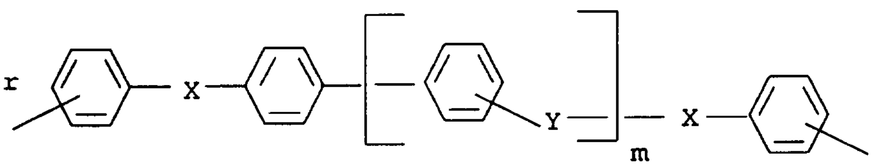

X,Y unabhängig voneinander eine chemische Bindung, —O— , —CO— , —S— , —$SO_2$— , —C($CH_3$)$_2$— , —Si($CH_3$)$_2$— oder —C($CF_3$)$_2$—

m eine ganze Zahl von 0 bis 3

und wobei sämtliche aromatischen Ringe mit $C_1$- bis $C_8$-Alkyl- oder $C_6$- bis $C_{20}$-Arylgruppen sowie mit Halogenatomen substituiert sein können

und

C) 0 bis 100 Gew.-%, bezogen auf die Summe A) und B), faser- oder teilchenförmige Füllstoffe oder deren Mischungen.

Außerdem betrifft die Erfindung Verfahren zur Herstellung dieser hochtemperaturbeständigen Blockcopolykondensate, deren Verwendung zur Herstellung von Fasern, Folien und Formkörpern sowie die hierbei erhältlichen Fasern, Folien und Formkörper aus den hochtemperaturbeständigen Blockcopolykondensaten.

Hochtemperaturbeständige Blockcopolykondensate auf der Basis von vollaromatischen thermotropen Polyesterblöcken und Polyimidblöcken finden aufgrund ihres Eigenschaftsprofils in den verschiedensten Bereichen Verwendung, beispielsweise im Fahrzeug- und Apparatebau, in der Luft- und Raumfahrt sowie in der Elektronik und Elektrotechnik.

Aus der EP-A 278 066 und der EP-A 291 323 sind Mischungen von flüssig-kristallinen Polyestern mit Isopropylidengruppen enthaltenden Polyetherimiden bekannt, die jedoch nicht miteinander verträglich sind und daher eine mangelnde Phasenadhäsion aufweisen, woraus ein unbefriedigendes mechanisches Eigenschaftsprofil resultiert.

Die EP-A 314 986 und die EP-A 347 548 beschreiben Polyesterimide, die einkondensierte Reste von N-(3-Hydroxyphenyl)-trimellitsäureimid enthalten. Diese Polymeren weisen jedoch eine nicht zufriedenstellende Wärmeformbeständigkeit auf.

Der Erfindung lag daher die Aufgabe zugrunde, hochtemperaturbeständige Blockcopolykondensate zur Verfügung zu stellen, die die genannten Nachteile nicht aufweisen.

Die Aufgabe wird erfindungsgemäß gelöst durch die eingangs definierten hochtemperaturbeständigen Blockcopolykondensate. Außerdem wurden Verfahren zur Herstellung dieser hochtemperaturbeständigen Blockcopolykondensate, deren Verwendung zur Herstellung von Fasern, Folien und Formkörpern sowie die hierbei erhältlichen Fasern, Folien und Formkörper aus den hochtemperaturbeständigen Blockcopolykondensaten als wesentliche Komponente gefunden.

Als Komponente A) enthalten die erfindungsgemäßen hochtemperaturbeständigen Blockcopolykondensate 50 bis 98 Gew.-%, vorzugsweise 60 bis 95 Gew.-% vollaromatische thermotrope Polyesterblöcke, welche sich aus den nachstehend im Detail beschriebenen Komponenten $a_{1)}$ bis $a_{3)}$ aufbauen.

Bei der Komponente $a_{1)}$, deren Anteil an den vollaromatischen thermotropen Polyesterblöcken 10 bis 90, vorzugsweise 20 bis 70 mol-%, bezogen auf die Summe der molaren Anteile der Komponenten $a_{1)}$ bis $a_{3)}$, beträgt, handelt es sich um wiederkehrende Einheiten der Formel I

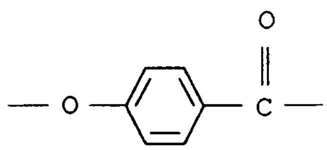

(I),

die sich von 4-Hydroxybenzoesäure bzw. deren esterbildenden Derivaten ableiten.

Die Einheiten der Formeln II und III

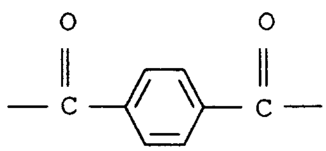

(II)

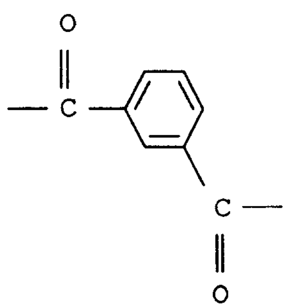

(III),

deren Anteil insgesamt 5 bis 45, vorzugsweise 15 bis 40 und insbesondere 20 bis 35 mol-%, bezogen auf die Summe der molaren Anteile der Komponenten $a_{1)}$ bis $a_{3)}$, beträgt, leiten sich ab von Terephthalsäure (Formel II) und Isophthalsäure (Formel III) bzw. deren esterbildenden Derivaten. Dabei machen die Einheiten der Formel II ($a_{21}$) 50 bis 100 mol-%, bezogen auf die Summe $a_{21)}$ + $a_{22)}$ und entsprechend die Einheiten der Formel III ($a_{22}$) 0 bis 50 mol-%, bezogen auf die Summe von $a_{21)}$ + $a_{22)}$, aus.

Als Komponente $a_{3)}$ enthalten die vollaromatischen thermotropen Polyesterblöcke A) 5 bis 45, vorzugsweise 15 bis 40 und insbesondere 20 bei 35 mol-%, bezogen auf die Summe der molaren Anteile der Komponenten $a_{1)}$ bis $a_{3)}$, einer Mischung aus

$a_{31)}$ 50 bis 100 mol-%, bezogen auf die Summe $a_{31)}$ + $a_{32)}$ mindestens einer der wiederkehrenden Einheiten IV bis VIII

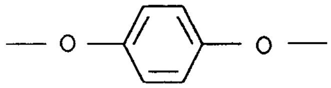

(IV)

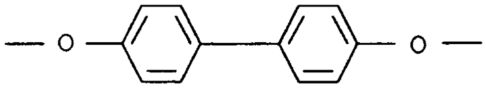

(V)

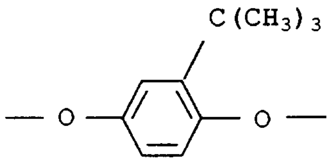

(VI)

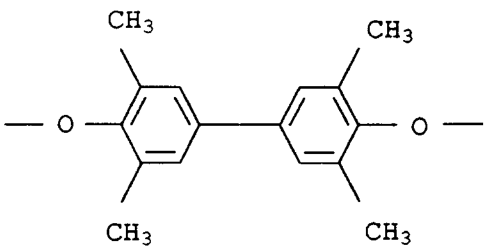

(VII)

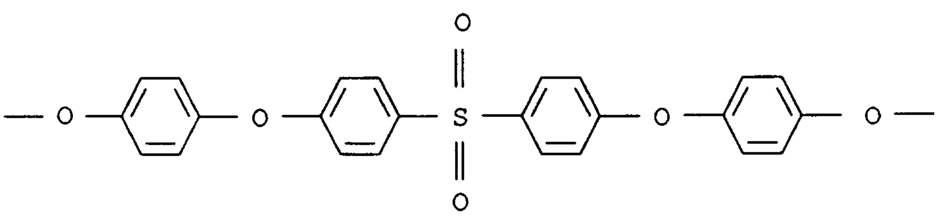

(VIII)

und

$a_{32)}$ 0 bis 50 mol-%, bezogen auf die Summe $a_{31)}$ + $a_{32)}$, mindestens einer der wiederkehrenden Einheiten der Formeln IX bis XIII

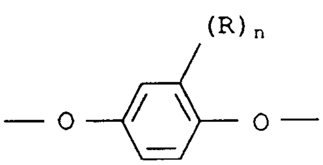

(IX)

wobei R eine Methyl- oder Phenylgruppe oder ein Chloratom darstellt und n den Wert 1, 2 oder 3 hat,

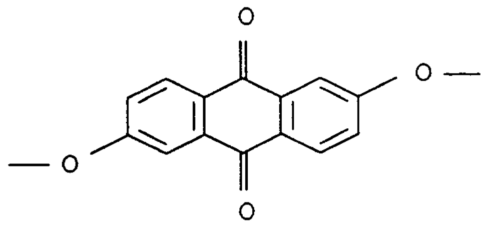

(X)

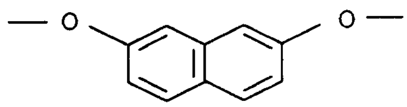

(XI)

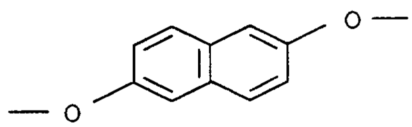

(XII)

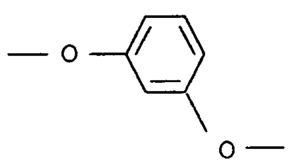

(XIII)

Ausgangsverbindungen für die Einheiten der Formeln IV bis XIII sind:

| Einheit | Ausgangsverbindung |
|---|---|
| IV | Hydrochinon |
| V | 4,4'-Dihydroxydiphenyl |
| VI | t-Butylhydrochinon |
| VII | 3,3',5,5'-Tetramethyl-4,4'-dihydroxydiphenyl |
| VIII | 4,4'-Di-(p-hydroxyphenoxy)diphenylsulfon |
| IX | Methyl-, Phenyl-, Chlorhydrochinon (n = 1) |
| X | 2,6-Dihydroxyanthrachinon |
| XI | 2,7-Dihydroxynaphthalin |
| XII | 2,6-Dihydroxynaphthalin |
| XIII | Resorcin (1,3-Dihydroxybenzol). |

Es versteht sich, daß auch funktionelle Derivate der vorstehenden Verbindungen eingesetzt werden können, sofern diese unter den Reaktionsbedingungenen bei der Herstellung der Polyesterblöcke A) die gleichen wiederkehrenden Einheiten ergeben.

Das molare Verhältnis der Komponenten $a_{2)}$ : $a_{3)}$ liegt im Bereich von 0,9 : 1 bis 1,1 : 1, vorzugsweise 0,95 : 1 bis 1,05 : 1 und insbesondere von 0,98 : 1 bis 1,04 : 1.

Nachstehend werden einige bevorzugte Arten der Komponente A) etwas detaillierter beschrieben.

1. Vollaromatische thermotrope Polyesterblöcke, aufgebaut aus

$a_{1)}$ 20 bis 70 mol-% wiederkehrenden Einheiten der Formel I

$a_{2)}$ 15 bis 40 mol-% einer Mischung aus

$a_{21)}$ 50 bis 100 mol-%, bezogen auf $a_{21)}$ t $a_{22)}$, wiederkehrenden Einheiten der Formel II und

$a_{22)}$ 0 bis 50 mol-%, bezogen auf $a_{21)}$ + $a_{22)}$, wiederkehrenden Einheiten der Formel III und

$a_{3)}$ 15 bis 40 mol-% einer Mischung aus

$a_{311)}$ 30 bis 70 mol-%, bezogen auf $a_{311)}$ + $a_{312)}$, wiederkehrenden Einheiten der Formel IV und

$a_{312)}$ 30 bis 70 mol-%, bezogen auf $a_{311)}$ + $a_{312)}$, wiederkehrenden Einheiten der Formel V,

wobei das molare Verhältnis der Komponenten $a_{2)}$ : $a_{3)}$ im Bereich von 0,9 : 1 bis 1,1 : 1 liegt.

2. Vollaromatische thermotrope Polyesterblöcke, aufgebaut aus

$a_{1)}$ 10 bis 60 mol-% wiederkehrenden Einheiten der Formel I,

$a_{2)}$ 20 bis 45 mol-% wiederkehrenden Einheiten der Formel II, und

$a_{3)}$ 20 bis 45 mol-% einer Mischung aus

$a_{311)}$ 20 bis 50 mol-%, bezogen auf die Summe $a_{311)}$ + $a_{312)}$ + $a_{314)}$, wiederkehrenden Einheiten der Formel IV,

$a_{312)}$ 15 bis 50 mol-%, bezogen auf die Summe $a_{311)}$ + $a_{312)}$ + $a_{314)}$, wiederkehrenden Einheiten der Formel V, und

$a_{314)}$ 25 bis 65 mol-%, bezogen auf die Summe $a_{311)}$ + $a_{312)}$ + $a_{314)}$, wiederkehrenden Einheiten der Formel XI,

wobei das molare Verhältnis der Komponenten $a_{2)}$ : $a_{3)}$ im Bereich von 0,9 : 1 bis 1,1 : 1 liegt.

Bis zu 50 mol-% des Anteils der wiederkehrenden Einheiten der Formeln IV und/oder V können in derartigen Polykondensaten auch durch wiederkehrende Einheiten der Formeln

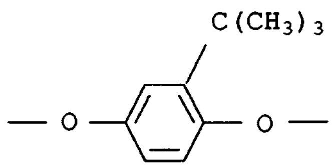

(VI)

und/oder Einheiten der Formel (IXa)

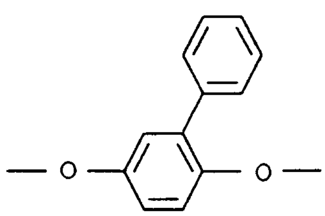

(IXa)

ersetzt werden, wobei der Anteil dieser Einheiten insgesamt vorzugsweise 2 bis 20 mol-%, der Anteil der Einheiten der Formeln VI, IX und XI insgesamt vorzugsweise 20 bis 40 mol-% beträgt.

Auch der Ersatz von bis zu 50 mol-% der Einheiten der Formeln IV und/oder V durch wiederkehrende Einheiten der Formeln

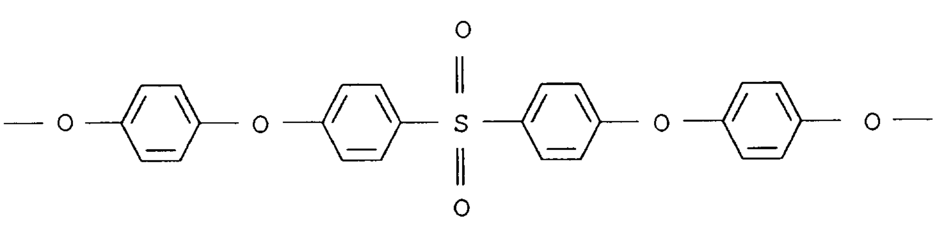

(VIII)

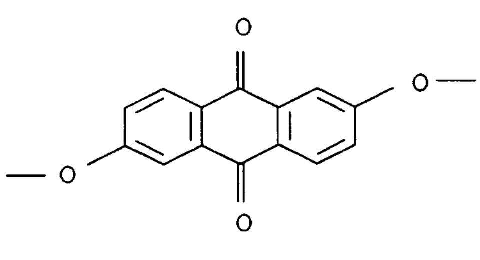

(X)

oder

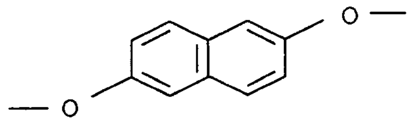

(XII)

ist möglich, wobei der Anteil der Summe der wiederkehrenden Einheiten der Formeln VIII, X und XII vorzugsweise 20 bis 40 mol-% beträgt.

3. Vollaromatische thermotrope Polyesterblöcke, aufgebaut aus

$a_{1)}$ 10 bis 84 mol-% wiederkehrenden Einheiten der Formel I,

$a_{2)}$ 8 bis 45 mol-% einer Mischung aus

$a_{21)}$ 50 bis 100 mol-%, bezogen auf $a_{21)}$ + $a_{22)}$, wiederkehrenden Einheiten der Formel II und

$a_{22)}$ 0 bis 50 mol-%, bezogen auf $a_{21)}$ + $a_{22)}$, wiederkehrenden Einheiten der Formel III, und

$a_{3)}$ 8 bis 45 mol-% einer Mischung aus

$a_{312)}$ 25 bis 60 mol-%, bezogen auf die Summe a $_{312)}$ + $a_{313)}$, wiederkehrenden Einheiten der Formel V, und

$a_{313)}$ 40 bis 75 mol-%, bezogen auf die Summe $a_{312)}$ + $a_{313)}$, wiederkehrenden Einheiten der Formel VI,

wobei das molare Verhältnis der Komponenten $a_{2)}$ : $a_{3)}$ im Bereich von 0,9 : 1 bis 1,1 : 1 liegt.

In derartigen Produkten können bis zu 50 mol-% der wiederkehrenden Einheiten der Formel V ersetzt werden durch wiederkehrende Einheiten der Formeln IV, X, XII und/oder XIII. Der Anteil der Einheiten der Formel VI liegt vorzugsweise im Bereich von 15 bis 25 mol-%, unabhängig davon, ob daneben nur Einheiten der Formel V oder aber auch Einheiten der Formeln IV, X, XII und/oder XIII enthalten sind.

4. Vollaromatische thermotrope Polyesterblöcke, aufgebaut aus

$a_{1)}$ 10 bis 70, vorzugsweise 20 bis 50 mol-% wiederkehrenden Einheiten der Formel I,

$a_{2)}$ 15 bis 45, vorzugsweise 25 bis 40 mol-% wiederkehrenden Einheiten der Formel II, und

$a_{3)}$ 15 bis 45, vorzugsweise 25 bis 40 mol-% einer Mischung aus

$a_{313)}$ 30 bis 75, vorzugsweise 35 bis 65 mol-%, bezogen auf die Summe $a_{313)}$ + $a_{315)}$, wiederkehrenden Einheiten der Formel VI und

$a_{315)}$ 25 bis 70, vorzugsweise 35 bis 65 mol-%, bezogen auf die Summe $a_{313)}$ + $a_{315)}$, wiederkehrenden Einheiten der Formel VIII,

wobei das molare Verhältnis der Komponenten $a_{2)}$ : $a_{3)}$ im Bereich von 0,9 : 1 bis 1,1 : 1 liegt.

Gemäß einer Variante solcher Produkte können bis zu 50 mol-% der wiederkehrenden Einheiten der Formel VI ersetzt werden durch wiederkehrende Einheiten der Formeln IV, V und/oder IX, wobei die Summe der Anteile der Einheiten IV und V, vorzugsweise 5 bis 40 mol-%, und der Anteil der Einheiten IX vorzugsweise 5 bis 50 mol-%, jeweils bezogen auf die Summe der wiederkehrenden Einheiten $a_{313)}$ + $a_{315)}$, betragen.

5. Vollaromatische thermotrope Polyesterblöcke, aufgebaut aus

$a_{1)}$ 10 bis 84, vorzugsweise 20 bis 70 mol-%, wiederkehrenden Einheiten der Formel I

$a_{2)}$ 8 bis 45, vorzugsweise 15 bis 40 mol-%, wiederkehrenden Einheiten der Formel II, und

$a_{3)}$ 8 bis 45, vorzugsweise 15 bis 40 mol-%, einer Mischung aus

$a_{316)}$ 30 bis 80, vorzugsweise 35 bis 70 mol-%, bezogen auf die Summe $a_{316)}$ + $a_{317)}$, wiederkehrenden Einheiten der Formeln VI und/oder V, und

$a_{317)}$ 20 bis 70, vorzugsweise 30 bis 65 mol-%, bezogen auf $a_{316)}$ + $a_{317)}$, wiederkehrenden Einheiten der Formel VIII,

wobei das molare Verhältnis der Komponenten $a_{2)}$ : $a_{3)}$ im Bereich von 0,9 : 1 bis 1,1 : 1 liegt.

Besonders bevorzugt sind vollaromatische thermotrope Polyesterblöcke, bei denen die Komponente $a_{3)}$ zu 100 mol-%, bezogen auf die Summe $a_{31)}$ + $a_{32)}$, aus $a_{31)}$ besteht, insbesondere die unter Punkt 1 beschriebenen vollaromatischen thermotropen Polyesterblöcke.

Vollaromatische thermotrope Polyesterblöcke der vorstehend beschriebenen Arten sowie ihre Herstellung sind beispielsweise in der EP-A 139 303, EP-A 226 839, EP-A 226 078, EP-A 225 539, EP-A 226 847 und EP-A 257 558 beschrieben, auf die hier wegen näherer Einzelheiten verwiesen sei.

Als Komponente B) enthalten die erfindungsgemäßen hochtemperaturbeständigen Blockcopolykondensate 2 bis 50 Gew.-%, vorzugsweise 5 bis 40 Gew.-% Polyimidblöcke, aufgebaut aus Einheiten der allgemeinen Formel XIV

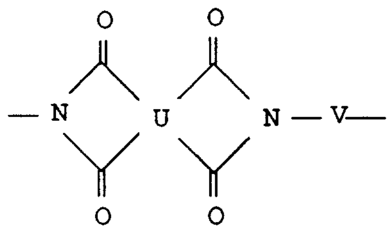

(XIV)

in der die Substituenten folgende Bedeutung haben:

U

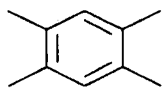 oder 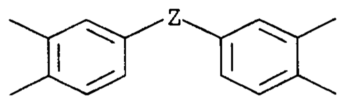 ,

Z chemische Bindung, $-O-$ , $-CO-$ , $-S-$ , $-SO_2-$ , $-C(CH_3)_2-$ , $-Si(CH_3)_2-$ , $-C(CF_3)_2-$ ,

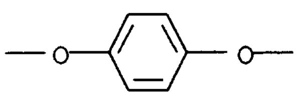 oder 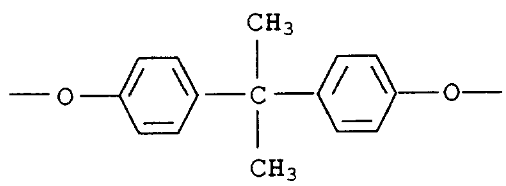

V m-Phenylen, p-Phenylen,

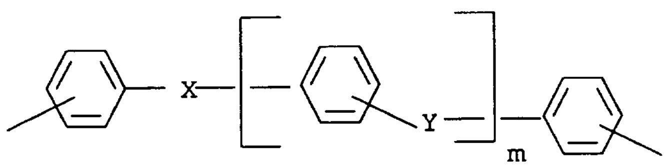

oder 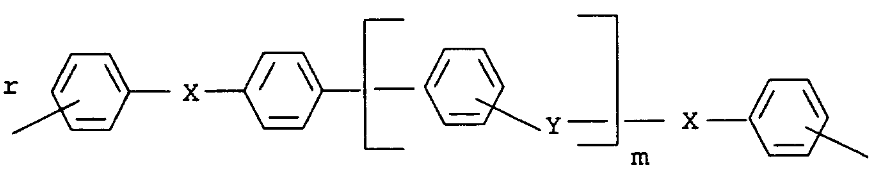

X,Y unabhängig voneinander eine chemische Bindung, $-O-$ , $-CO-$ , $-S-$ , $-SO_2-$ , $-C(CH_3)_2-$ , $-Si(CH_3)_2-$ oder $-C(CF_3)_2-$

m eine ganze Zahl von 0 bis 3

und wobei sämtliche aromatischen Ringe mit $C_1$- bis $C_8$-Alkyl- oder $C_6$- bis $C_{20}$-Arylgruppen sowie mit Halogenatomen substituiert sein können.

Im allgemeinen werden jedoch die unsubstituierten Derivate bevorzugt.

Als besonders geeignet haben sich Einheiten der allgemeinen Formel XIV erwiesen, in denen

U für

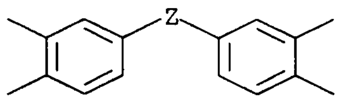

und

Z für —O— , —CO— oder

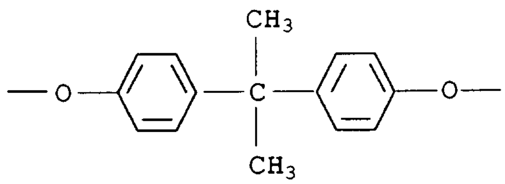

steht,

V für m-Phenylen

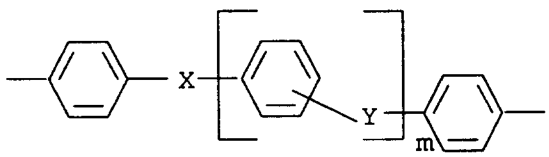

oder

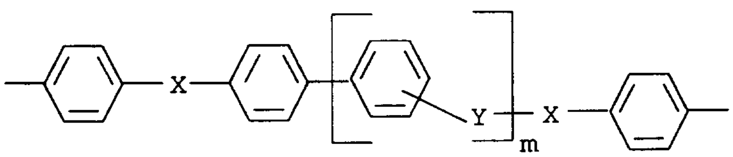

X für —O— , —CO— oder —$SO_2$—

Y für —O— oder —$SO_2$— und

m 0 oder 1 bedeutet.

Besonders bevorzugt sind:

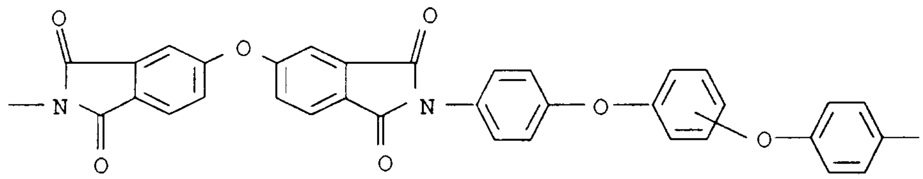

(XIVa)

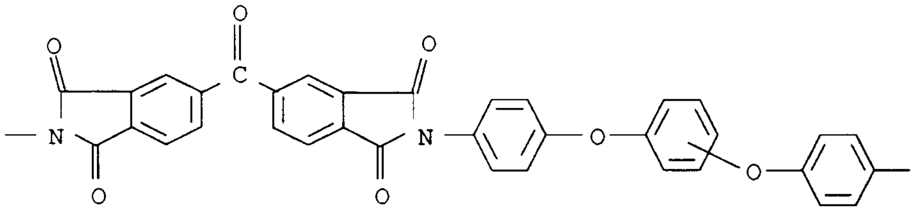

(XIVb)

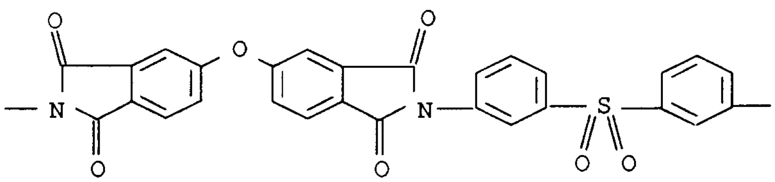

(XIVc)

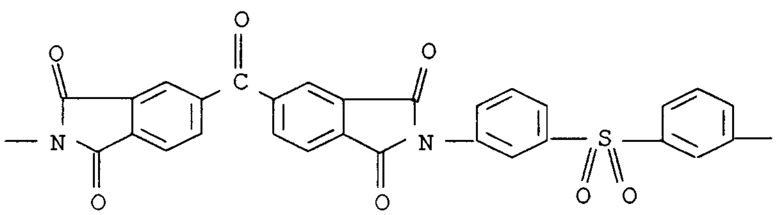

(XIVd)

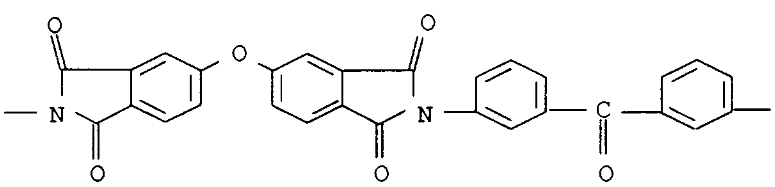

(XIVe)

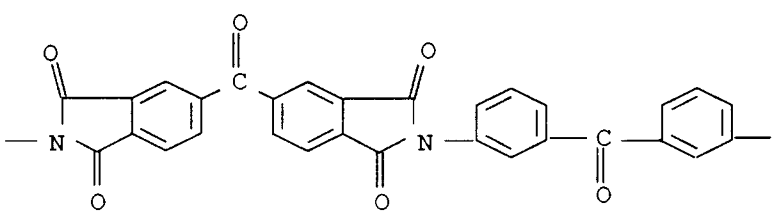

(XIVf)

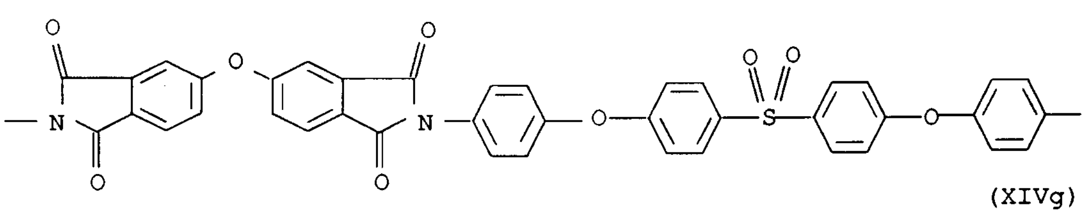

(XIVg)

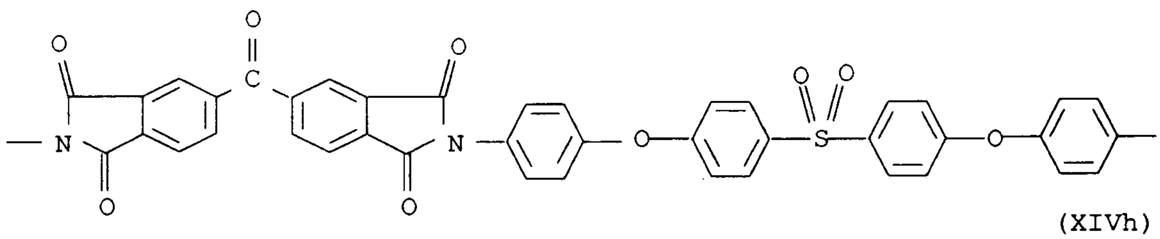

(XIVh)

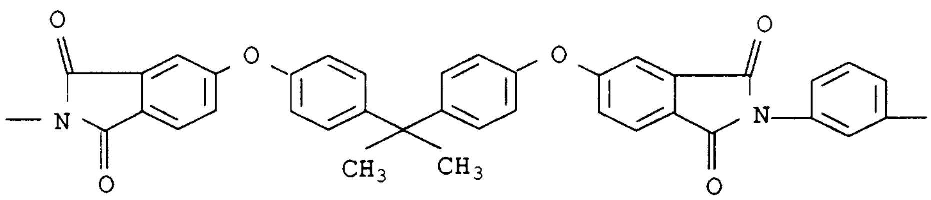

(XIVi)

Insbesondere sind die Einheiten XIVa, XIVc, XIVd und XIVg zu nennen.

Mischungen verschiedener Einheiten der allgemeinen Formel XIV können ebenfalls als Komponente B) eingesetzt werden.

Polyimidblöcke der vorstehend beschriebenen Arten sowie ihre Herstellung sind beispielsweise in der EP-A 122 060 und der US-A 4 820 791 sowie in "Polyimides", D. Wilson, H.D. Stenzenberger und P.M. Hergenrother (Eds.), Verlag Blackie, Glasgow and London, 1990 beschrieben, auf die hier wegen näherer Einzelheiten verwiesen sei.

Durch Zugabe von hydroxysubstituierten Aminen oder Anhydriden erhält man dihydroxyterminierte Polyimidblöcke, carboxylterminierte Blöcke lassen sich durch Zugabe von carboxylsubstituierten Aminen oder Anhydriden herstellen.

Es versteht sich, daß auch Derivate der oben genannten Reagenzien eingesetzt werden können, sofern diese unter den Reaktionsbedingungen der Blcokcopolymer-Herstellung die gleichen wiederkehrenden Einheiten bilden.

Bevorzugt sind dabei Derivate, die sich von der Essigsäure ableiten, also acetoxysubstituierte Amine oder Anhydride.

Die als Komponente B) eingesetzten Polyimidblöcke weisen mittlere Molekulargewichte $\overline{M}_n$ - (Zahlenmittel) von 1000 bis 30 000, bevorzugt von 2000 bis 20 000 auf.

Weiterhin können die erfindungsgemäßen hochtemperaturbeständigen Blockcopolykondensate als Komponente C) faser- oder teilchenförmige Füllstoffe, sowie deren Mischungen, in Mengen von 0 bis 100 Gew.-%, bezogen auf A) + B), insbesondere von 0 bis 80 Gew.-%, enthalten. Als verstärkend wirkende Füllstoffe seien beispielsweise Asbest oder Fasern aus Aramid, Glas oder Kohlenstoff genannt, die sowohl als Kurzfasern als auch als Endlosfasern eingesetzt werden können. Weiterhin können Pigmente wie Titandioxid, Cadmium- oder Zinksulfid, Bariumsulfat und Ruß zugemischt werden. Als weitere Zusatz- und Hilfsstoffe kommen verschiedene Stabilisatoren und übliche Verarbeitungshilfsmittel in Betracht.

Zur Herstellung der erfindungsgemäßen hochtemperaturbeständigen Blockcopolykondensate können die üblichen, dem Fachmann an sich bekannten Verfahren zur Blockcopolykondensation angewandt werden. In einer bevorzugten Ausführungsform werden die zur Bildung der vollaromatischen thermotropen Polyesterblöcke A) erforderlichen Monomeren in Gegenwart der dihydroxy- bzw. diacetoxy- oder dicarboxylterminierten Polyimidblöcken B) umgesetzt. Werden als Komponente B) dihydroxy- bzw. diacetoxyterminierte Polyimidblöcke verwendet, so hat es sich als geeignet erwiesen, wenn die dicarboxylterminierten Monomeren, die zur Bildung der vollaromatischen thermotropen Polyesterblöcke A) erforderlich sind, zumindest teilweise im Überschuß eingesetzt werden. Ebenso ist es natürlich von Vorteil, wenn die dihydroxyterminierten Monomeren, die zur Bildung der Komponente A) erforderlich sind, im Überschuß eingesetzt werden, falls die Komponente B) aus dicarboxylterminierten Polyimidblöcken besteht. Üblicherweise wird der Überschuß so gewählt, daß die Blockcopolykondensation mit stöchiometrischen Mengen an dihydroxy- und dicarboxylterminierten Verbindungen ablaufen kann.

Vorteilhafterweise wird die Kondensationsreaktion unter Zusatz eines 5 bis 60, insbesondere 10 bis 50 mol-%igen Überschusses, bezogen auf den Gesamtgehalt an Hydroxylgruppen, eines Anhydrids einer Alkancarbonsäure mit 2 bis 6 C-Atomen in einem einstufigen Verfahren durchgeführt. Bevorzugt werden Essigsäureanhydrid, Propionsäureanhydrid und Buttersäureanhydrid, insbesondere jedoch Essigsäureanhydrid verwendet.

Die Kondensationsreaktion kann in der Schmelze oder unter Zusatz eines hochsiedenden Lösevermittlers wie N-Methyl-2-pyrrolidinon durchgeführt werden.

Weiterhin ist es vorteilhaft, die Umsetzung unter Inertgasatmosphäre, z.B. unter Stickstoff oder Argon, durchzuführen.

Es kann auch von Vorteil sein, die Umsetzung durch Verwendung von Katalysatoren, wie Salzen niederer Carbonsäuren, die z.B. in der EP-A 131 846 beschrieben sind, zu beschleunigen. In diesem Fall beträgt die Menge an Katalysatoren 0,001 bis 1 Gew.-%, bezogen auf die Gesamtmenge an eingesetzten Edukten.

In einer besonders bevorzugten Ausführungsform werden die zur Herstellung der Monomeren $a_{1)}$ bis $a_{3)}$ geeigneten Verbindungen, die Komponente B), ein Carbonsäureanhydrid und gegebenenfalls ein Lösevermittler unter Inertgasatmosphäre vermischt und unter Rühren bis zum Siedepunkt des Carbonsäureanhydrids erhitzt. Anschließend wird die Temperatur stufenweise erhöht, indem man die Reaktionsmischung bis zu 5 Stunden, vorzugsweise bis zu 3 Stunden bei einer Temperatur von 130 bis 300 °C hält und anschließend die Temperatur vorzugsweise innerhalb eines Zeitraums von 1 bis 3 Stunden auf 300 bis 400 °C erhöht. Dabei werden im Verlauf der Reaktion überschüssiges Carbonsäureanhydrid, gebildete Carbonsäuren und gegebenenfalls zugesetztes Lösemittel abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen Produkte können anschließend einer Nachkondensation in fester Phase unterworfen werden. Diese wird vorzugsweise bei Temperaturen im Bereich von 200 bis 300 °C, insbesondere von 200 bis 280 °C, vorgenommen. Es ist auch möglich, die Nachkondensation in fester Phase nach einer thermoplastischen Verarbeitung vorzunehmen.

Vorteilhafterweise wird auch die Kondensation in fester Phase unter Inertgasatmosphäre, z.B. unter Stickstoff oder Argon, durchgeführt. Gegebenenfalls wird danach die Komponente C) zugemischt.

Die inhärente Viskosität der erfindungsgemäßen Blockcopolykondensate, bestimmt an einer 0,1 gew.-%igen Lösung in Pentafluorphenol bei 60 °C, liegt vorzugsweise im Bereich von 1 bis 6, insbesondere von 1,5 bis 5 dl/g.

Die erfindungsgemäßen hochtemperaturbeständigen Blockcopolykondensate zeichnen sich insgesamt durch ein ausgewogenes Eigenschaftsspektrum - wie hoher Thermostabilität, ausgezeichneter Wärmeform- und Chemikalienbeständigkeit bei guter Zähigkeit, exzellenter Fließfähigkeit und guter Haftung auf Metalloberflächen - aus und sind zur Herstellung von Fasern, Folien und Formkörpern geeignet.

Beispiele

Herstellung von hochtemperaturbeständigen Blockcopolykondensaten

Beispiel 1

Es wurden folgende Komponenten eingesetzt:
195 mmol (≙ 39,4 mol-%) 4-Hydroxybenzoesäure
150 mmol (≙ 30,3 mol-%) Terephthalsäure
52,5 mmol (≙ 10,6 mol-%) Hydrochinon
30 mmol (≙ 6,1 mol-%) 4,4'-Dihydroxydiphenyl
67 mmol (≙ 13,6 mol-%) 2,7-Dihydroxynaphthalin
(zusammen 85 Gew.-%)
und
2 mmol (15 Gew.-%) eines diacetoxyterminierten Polyimidblocks, aufgebaut aus Einheiten der Formel XIVa

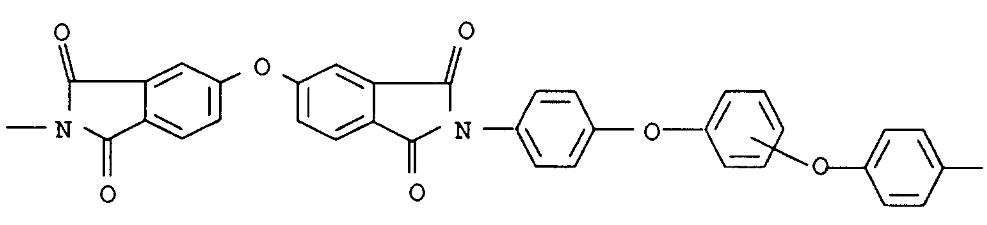

(XIVa)

mit einem mittleren Molekulargewicht $\overline{M}_n$ (Zahlenmittel) von 4160.

Die Ausgangskomponenten wurden mit 670 mmol Essigsäureanhydrid unter Stickstoffatmosphäre vermischt, unter Rühren innerhalb von 15 min auf 150 °C Außentemperatur erwärmt und dann innerhalb von 180 min auf 360 °C erhitzt. Im Anschluß daran wurde über einen Zeitraum von 75 min der Druck auf ein Endvakuum von 1,5 mbar reduziert. Danach wurde mit Stickstoff belüftet, die Wärmezufuhr unterbrochen und das Polymer aus dem Reaktionsgefäß entfernt.

Das erhaltene Polymer ergab eine fadenbildende mesomorphe Schmelze.

Die inhärente Viskosität, gemessen an einer 0,1 gew.-%igen Lösung in Pentafluorphenol bei 60 °C, betrug 1,71 dl/g.

Gepreßte Rundscheiben waren gut konsolidiert und wiesen eine hohe Zähigkeit auf.

Aus DSC-Messungen (Differential Scanning Calorimetry) ergaben sich zwei Glasstufen bei 126 und 204 °C sowie eine schwach ausgeprägte Schmelzendotherme mit einem Maximum bei 277 °C. Aus Torsionsschwingungsanalysen wurden zwei Glasstufen bei 124 und 205 °C bestimmt.

In der thermogravimetrischen Analyse (TGA) wurde ein Gewichtsverlust von 5 % unter Stickstoffatmosphäre bei 487 °C festgestellt.

Die Schmelzeviskosität, bestimmt mit einem Platte-Platte Rotations-Rheometer bei 300 °C, betrug 380 Pa•s bei einer Frequenz von 10 rad/s.

Vergleichsbeispiel V1

Herstellung eines vollaromatischen thermotropen Polyesters

Aus den in Beispiel 1 angegebenen Monomeren 4-Hydroxybenzoesäure, Terephthalsäure, Hydrochinon, 4,4'-Dihydroxydiphenyl und 2,7-Dihydroxynaphthalin(Mengenverhältnisse wie in Beispiel 1) wurde nach dem in Beispiel 1 beschriebenen Verfahren ein Polyester hergestellt.

Das Produkt ergab eine fadenbildende mesomorphe Schmelze.

Die inhärente Viskosität, bestimmt an einer 0,1 gew.-%igen Lösung in Pentafluorphenol bei 60 °C, betrug 1,92 dl/g.

Aus DSC-Messungen war eine Glasstufe bei 123 °C bestimmbar.

Die TGA ergab unter Stickstoffatmosphäre einen Gewichtsverlust von 5 % bei 463 °C.

Beispiel 2

Es wurden folgende Komponenten eingesetzt:

225 mmol (≙ 43,2 mol-%) 4-Hydroxybenzoesäure
105 mmol (≙ 20,2 mol-%) Terephthalsäure
45 mmol (≙ 8,6 mol-%) Isophthalsäure
72,7 mmol (≙ 14,0 mol-%) Hydrochinon
72,7 mmol (≙ 14,0 mol-%) 4,4'-Dihydroxydiphenyl
(zusammen 80 Gew.-%)
und
4,7 mmol (20 Gew.-%) des in Beispiel 1 beschriebenen diacetoxyterminierten Polyimidblocks.

Die Ausgangskomponenten und 696 mmol Essigsäureanhydrid wurden unter Stickstoffatmosphäre vorgelegt. Unter Rühren wurde in 15 min auf 150 °C Außentemperatur erwärmt. In weiteren 180 min wurde auf eine Endtemperatur von 360 °C erhitzt. Innerhalb von 70 min wurde dann der Druck bis auf 20 mbar vermindert.

Das Polymer ergab eine fadenbildende mesomorphe Schmelze.

Die inhärente Viskosität des erhaltenen Polymeren, gemessen an einer 0,1 gew.-%igen Lösung in Pentafluorphenol bei 60 °C, betrug 2,46 dl/g. Gepreßte Rundscheiben des Materials wiesen eine hohe Zähigkeit auf.

Aus DSC-Messungen ergab sich ein Glaspunkt von 197 °C und ein Schmelzpunkt von 323 °C.

Ein Gewichtsverlust von 5 % unter Stickstoffatmosphäre wurde in der TGA bei 495 °C beobachtet.

Die Schmelzeviskosität, gemessen mit einem Platte-Platte Rotations-Rheometer bei 330 °C, betrug bei einer Frequenz von 10 rad/s 180 Pa•s.

Vergleichsbeispiel V2

Herstellung eines vollaromatischen thermotropen Polyesters

Aus den in Beispiel 2 angegebenen Monomeren 4-Hydroxybenzoesäure, Terephthalsäure, Isophthalsäure, Hydrochinon und 4,4'-Dihydroxydiphenyl (Mengenverhältnisse wie in Beispiel 2) wurde nach dem in Beispiel 2 angegebenen Verfahren ein Polyester hergestellt.

Das Produkt ergab eine fadenbildende mesomorphe Schmelze.

Die inhärente Viskosität des erhaltenen Polymeren, gemessen an einer 0,1 gew.-%igen Lösung in Pentafluorphenol bei 60 ° C, betrug 2,69 dl/g.

Aus den DSC-Messungen ergab sich eine Glasstufe bei 117 ° C und ein Schmelzpunkt von 314 ° C.

Unter Stickstoffatmopshäre trat nach TGA ein 5 %iger Gewichtsverlust bei 472 ° C ein.

Vergleichsbeispiel V3

Herstellung eines Polyimids aus Einheiten der Formel XIVa

500 ml (5,2 mol) N-Methyl-2-pyrrolidinon (NMP) wurden mit 73,54 g (255 mmol) 1,3-Bis(p-aminophenoxy)benzol unter Stickstoff gemischt. Nachdem sich das Diamin vollständig gelöst hatte, wurden in die Mischung unter Wasserkühlung 77,55 g (250 mmol) 4,4'-Oxydiphthalsäureanhydrid (ODPA) und 1,48 g (10 mmol) Phthalsäureanhydrid eindosiert. Man spülte mit 150 ml NMP nach, entfernte die Wasserkühlung und ließ 5 Stunden bei Raumtemperatur rühren. Anschließend erfolgte die Zugabe von 500 ml NMP, 100 ml Pyridin und 250 ml Acetanhydrid und man rührte noch 6 Stunden bei 70 ° C. Die Mischung wurde langsam unter Rühren in 4 l Wasser eingegossen, wobei sich das Polyimid als gelber Feststoff abscheidete. Man filtrierte den erhaltenen Feststoff ab und befreite ihn durch gründliches Waschen mit Wasser weitgehend von anhaftendem NMP. Das Produkt wurde bei 150 ° C im Vakuum getrocknet.

Das Polyimid wies eine reduzierte Viskosität von 56 ml/g auf (gemessen an einer 0,5 gew.-%igen Lösung in NMP bei 25 ° C).

Aus DSC-Messungen ergaben sich eine Glasübergangstemperatur von 204 ° C und eine Schmelztemperatur von 336 ° C. Die Viskosität der Polyimid-Schmelze betrug, gemessen mit einem Platte-Platte-Rotations-Viskosimeter bei 360 ° C und einer Scherfrequenz von 10 rad/s 1100 Pa•s.

Beispiel 3

Zur Herstellung eines erfindungsgemäßen Blockcopolykondensates wurden folgende Komponenten eingesetzt;

270 mmol (54,0 mol-%) 4-Hydroxybenzoesäure
115 mmol (23,0 mol-%) Terephthalsäure
69 mmol (13,8 mol-%) 4-tert.-Butylhydrochinon
46 mmol (9,2 mol-%) 4,4'-Dihydroxydiphenyl
(zusammen 70 Gew.-%)
und
3,5 mmol (30 Gew.-%) eines diacetoxyterminierten Polyimidblocks, aufgebaut aus Einheiten der Formel XIVg

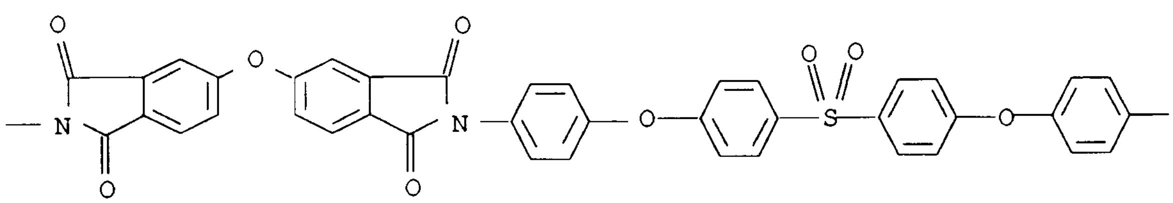

(XIVg)

mit einem mittleren Molekulargewicht $\overline{M}_n$ (Zahlenmittel) von 8200.

Die Ausgangskomponenten und 675 mmol Essigsäureanhydrid wurden unter Stickstoffatmosphäre vorgelegt. Unter Rühren wurde in 15 min auf 150 ° C Außentemperatur erwärmt. In weiteren 180 min wurde

auf eine Endtemperatur von 355 °C erhitzt. Innerhalb von 75 min wurde dann der Druck bis auf 15 mbar vermindert.

Das Polymer ergab eine fadenbildende mesomorphe Schmelze.

Die inhärente Viskosität des erhaltenen Polymeren, gemessen an einer 0,1 gew.-%igen Lösung in Pentafluorphenol bei 60 °C, betrug 2,13 dl/g. Gepreßte Rundscheiben des Materials wiesen eine hohe Zähigkeit auf.

Aus DSC-Messungen ergab sich ein Glaspunkt von 203 °C.

Ein Gewichtsverlust von 5 % unter Stickstoffatmosphäre wurde in der TGA bei 517 °C beobachtet.

Die Schmelzeviskosität, gemessen mit einem Platte-Platte-Rotations-Rheometer bei 330 °, betrug bei einer Frequenz von 10 rad/s 870 Pa•s.

Vergleichsbeispiel V4

Herstellung eines Polyimids aus Einheiten der Formel XIVg

310,3 g (717,5 mmol) 4,4'-Bis(p-aminophenoxy)diphenylsulfon (BAPS) wurden in 2 l N-Methyl-2-pyrrolidinon (NMP) unter Stickstoff gelöst. Nachdem das Diamin vollständig in Lösung gegangen war, wurden unter externer Wasserkühlung 5,25 g Phthalsäureanhydrid (35 mmol) und anschließend 217,1 g (700 mmol) 4,4'-Oxydiphthalsäureanhydrid (ODPA) so zugesetzt, daß die Temperatur der Mischung nicht über 30 °C anstieg. Nach beendeter Zugabe ließ man noch 5 Stunden rühren. Daraufhin wurden 1 l NMP, 220 ml Pyridin und 270 ml Acetanhydrid zugegeben und man erwärmte weitere 5 Stunden auf 60 °C. Die so erhaltene Polyimidlösung wurde in Wasser ausgefällt und anschließend mit Wasser, dessen Temperatur zwischen 80 und 85 °C betrug, 24 Stunden extrahiert. Man filtrierte das Polyimid ab und trocknete 2 Tage bei 140 °C.

Das erhaltene Polyimid besaß eine inhärente Viskosität von 46 ml/g (gemessen an einer 0,5 gew.-%igen Lösung in NMP bei 25 °C) und eine Glastemperatur von 255 °C.

Membranosmometrische Messungen an Lösungen des Polyimids in N,N-Dimethylformamid (DMF) lieferten ein Zahlenmittel des Molekulargewichtes von über 15 000 g/mol.

Bei 400 °C betrug die Viskosität der Schmelze des erhaltenen Polyimids 950 Pa•s.

Beispiel 4

Zur Herstellung eines erfindungsgemäßen Blockcopolykondensates wurden folgende Komponenten eingesetzt:

186 mmol (37,6 mol-%) 4-Hydroxybenzoesäure
154 mmol (31,2 mol-%) Terephthalsäure
85 mmol (17,2 mol-%) 4-tert.-Butylhydrochinon
69 mmol (14,0 mol-%) 4,4'-Di(p-hydroxyphenoxy)diphenylsulfon
(zusammen 75 Gew.-%)
und
5,3 mmol (25 Gew.-%) eines Polyimidblocks, aufgebaut aus Einheiten der Formeln XIVc und XIVd

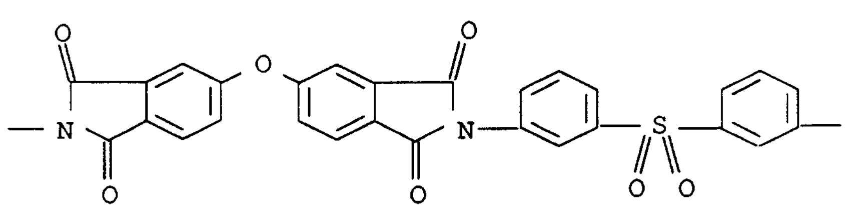

(XIVc)

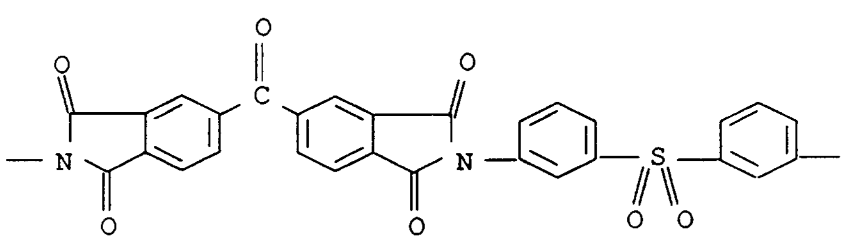

(XIVd)

Im Molverhältnis XIVc : XIVd = 1 : 1 mit einem mittleren Molekulargewicht $\overline{M}_n$ (Zahlenmittel) von 5400.

Die Ausgangskomponenten und 667 mmol wurden unter Stickstoffatmosphäre vorgelegt. Unter Rühren wurde in 15 min auf 150 °C Außentemperatur erwärmt. Innerhalb von 60 min wurde dann der Druck bis auf 45 mbar vermindert.

Das Polymer ergab eine fadenbildende mesomorphe Schmelze.

Die inhärente Viskosität des erhaltenen Polymeren, gemessen an einer 0,1 gew.-%igen Lösung in Pentafluorphenol bei 60 °C, betrug 1,96 dl/g. Gepreßte Rundscheiben des Materials wiesen eine hohe Zähigkeit auf.

Aus DSC-Messungen ergab sich ein Glaspunkt von 217 °C.

Ein Gewichtsverlust von 5 % unter Stickstoffatmosphäre wurde in der TGA bei 502 °C beobachtet.

Die Schmelzviskosität, gemessen mit einem Platte-Platte-Rotations-Rheometer bei 330 °C, betrug bei einer Frequenz von 10 rad/s 630 Pa•s.

Vergleichsbeispiel V5

Herstellung eines Polyimids aus Einheiten der Formeln XIVc und XIVd

250,8 g (1,01 mol) 3,3'-Diaminodiphenylsulfon (DDS) wurden in einer Mischung aus 1 l N-Methyl-2-pyrrolidon (NMP) und 1,5 l Xylol unter Stickstoff gelöst. Nachdem das Diamin vollständig in Lösung gegangen war, wurden unter externer Wasserkühlung 2,96 g (20 mmol) Phthalsäureanhydrid und anschließend 225,6 (700 mmol) Benzophenontetracarbonsäuredianhydrid (BTDA) und 93,06 g (300 mmol) 4,4'-Oxydiphthalsäureanhydrid (ODPA) so zugesetzt, daß die Temperatur der Mischung nicht über 30 °C anstieg. Nach beendeter Zugabe erhitzte man die Mischung zum Sieden (ca. 150 °C) und ließ 5 Stunden bei dieser Temperatur an einem Wasserabscheider rühren. Man destillierte das Xylol daraufhin ab, bis das ausgefallene Polyimid sich wieder gelöst hatte und ließ daraufhin abkühlen. Um die viskose Mischung rührbar zu halten, wurde noch 1 l NMP zugesetzt.

Die so erhaltene Polyimidlösung wurde in Wasser ausgefällt und anschließend mit Wasser, dessen Temperatur zwischen 80 und 85 °C betrug, 24 Stunden extrahiert. Man filtrierte das Polyimid ab und trocknete 2 Tage bei 140 °C.

Das erhaltene Polyimid besaß eine inhärente Viskosität von 56 ml/g (gemessen an einer 0,5 gew.-%igen Lösung in NMP bei 25 °C) und eine Glastemperatur von 254 °C.

Membranosmometrische Messungen an Lösungen des Polyimids in N,N-Dimethylformamid (DMF) lieferten ein Zahlenmittel des Molekulargewichtes von über 20 000 g/mol.

Bei 370 °C betrug die Viskosität der Schmelze des erhaltenen Polyimids bei einer Schergeschwindigkeit von 10 rad/s 2000 Pa•s.

## Patentansprüche

**1.** Hochtemperaturbeständige Blockcopolykondensate, enthaltend als wesentliche Komponenten

A) 50 bis 98 Gew.-% vollaromatische thermotrope Polyesterblöcke, aufgebaut aus

$a_{1)}$ 10 bis 90 mol-% wiederkehrenden Einheiten der Formel I

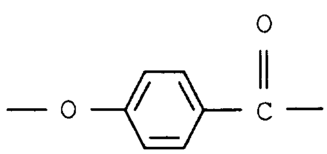

(I)

$a_{2)}$ 5 bis 45 mol-% einer Mischung aus

$a_{21)}$ 50 bis 100 mol-%, bezogen auf die Summe $a_{21)}$ + $a_{22)}$, wiederkehrenden Einheiten der Formel II

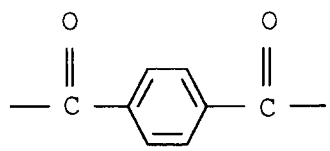

(II)

und

$a_{22)}$ 0 bis 50 mol-%, bezogen auf die Summe $a_{21)}$ + $a_{22)}$, wiederkehrenden Einheiten der Formel III

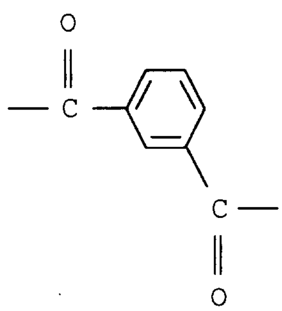

(III)

und

$a_{3)}$ 5 bis 45 mol-% einer Mischung aus

$a_{31)}$ 50 bis 100 mol-%, bezogen auf die Summe $a_{31)}$ + $a_{32)}$, mindestens einer der wiederkehrenden Einheiten IV bis VIII

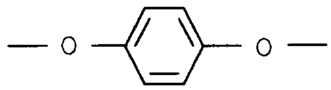 (IV)

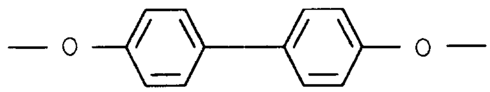 (V)

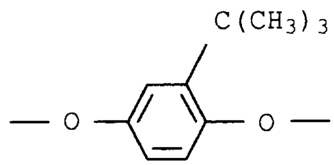 (VI)

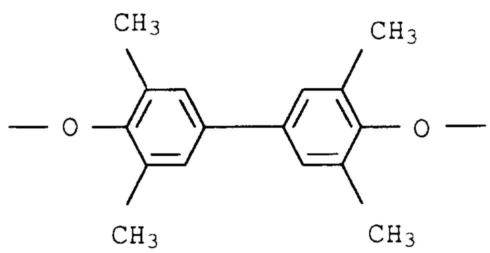 (VII)

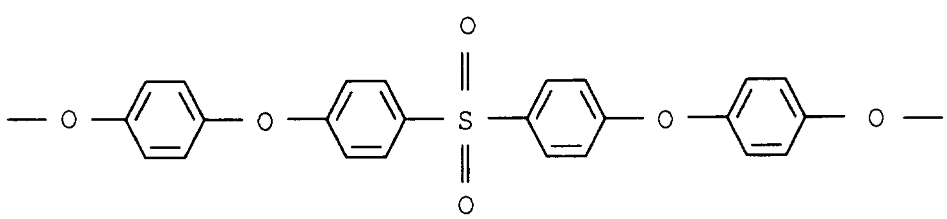 (VIII)

und

$a_{32)}$ 0 bis 50 mol-%, bezogen auf die Summe $a_{31)}$ + $a_{32)}$, mindestens einer der wiederkehrenden Einheiten der Formel IX bis XIII

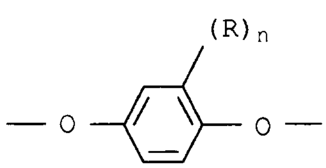 (IX)

wobei R einen Methyl- oder Phenylrest oder ein Chloratom darstellt und n den Wert 1, 2 oder 3 hat,

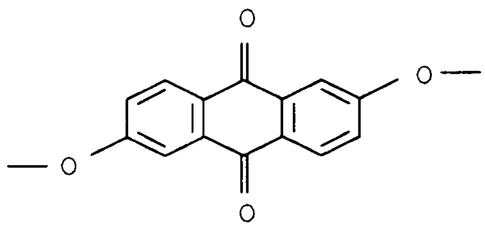

(X)

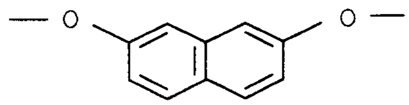

(XI)

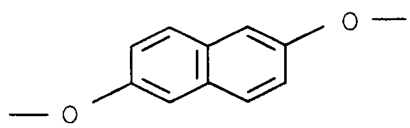

(XII)

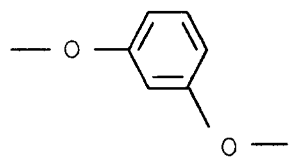

(XIII)

und wobei das molare Verhältnis der Komponenten $a_{2)}$ : $a_{3)}$ im Bereich von 0,9 : 1 bis 1,1 : 1 liegt,

B) 2 bis 50 Gew.-% Polyimidblöcke mit einem mittleren Molekulargewicht $\overline{M}_n$ (Zahlenmittel) von 1000 bis 30 000, aufgebaut aus Einheiten der allgemeinen Formel XIV

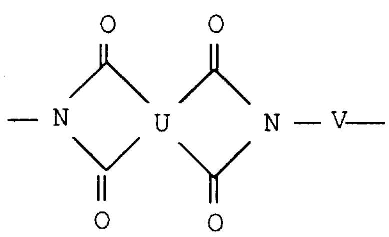

(XIV)

in der die Substituenten folgende Bedeutung haben:

U

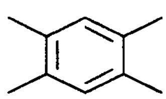 oder 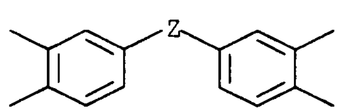 ,

Z chemische Bindung, —O— , —CO— , —S— , $—SO_2—$ , $—C(CH_3)_2—$ , $—Si(CH_3)_2—$ , $—C(CF_3)_2—$ ,

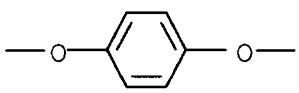 oder 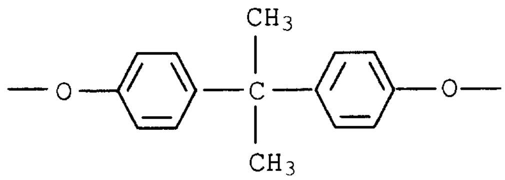

V m-Phenylen, p-Phenylen,

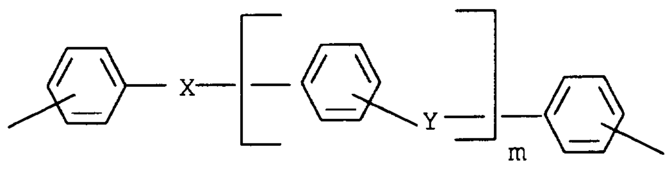

oder 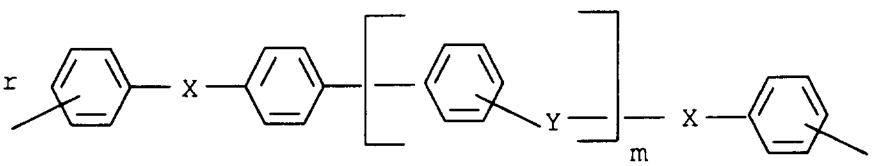

X,Y unabhängig voneinander eine chemische Bindung, —O— , —CO— , —S— , $—SO_2—$ , $—C(CH_3)_2—$ , $—Si(CH_3)_2—$ oder $—C(CF_3)_2—$

m eine ganze Zahl von 0 bis 3

und wobei sämtliche aromatischen Ringe mit $C_1$- bis $C_8$-Alkyl-oder $C_6$- bis $C_{20}$-Arylgruppen sowie mit Halogenatomen substituiert sein können

und

C) 0 bis 100 Gew.-%, bezogen auf die Summe A) und B), faser- oder teilchenförmige Füllstoffe oder deren Mischungen.

**2.** Hochtemperaturbeständige Blockcopolykondensate nach Anspruch 1, dadurch gekennzeichnet, daß die vollaromatischen thermotropen Polyesterblöcke A) aufgebaut sind aus

$a_{1)}$ 20 bis 70 mol-% wiederkehrenden Einheiten der Formel I

$a_{2)}$ 15 bis 40 mol-% einer Mischung aus

$a_{21)}$ 50 bis 100 mol-%, bezogen auf $a_{21)}$ + $a_{22)}$, wiederkehrenden Einheiten der Formel II und

$a_{22)}$ 0 bis 50 mol-%, bezogen auf $a_{21)}$ + $a_{22)}$, wiederkehrenden Einheiten der Formel III und

$a_{3)}$ 15 bis 40 mol-% einer Mischung aus

$a_{311)}$ 30 bis 70 mol-%, bezogen auf $a_{311)}$ + $a_{312)}$, wiederkehrenden Einheiten der Formel IV und

$a_{312)}$ 30 bis 70 mol-%, bezogen auf $a_{311)}$ + $a_{312)}$, wiederkehrenden Einheiten der Formel V,

wobei das molare Verhältnis der Komponenten $a_{2)}$ : $a_{3)}$ im Bereich von 0,9 : 1 bis 1,1 : 1 liegt.

**3.** Hochtemperaturbeständige Blockcopolykondensate nach Anspruch 1, dadurch gekennzeichnet, daß die vollaromatischen thermotropen Polyesterblöcke A) aufgebaut sind aus

$a_{1)}$ 10 bis 60 mol-% wiederkehrenden Einheiten der Formel I

$a_{2)}$ 20 bis 45 mol-% wiederkehrenden Einheiten der Formel II

$a_{3)}$ 20 bis 45 mol-% einer Mischung aus

$a_{311)}$ 20 bis 50 mol-%, bezogen auf die Summe $a_{311)}$ + $a_{312)}$ + $a_{314)}$, wiederkehrenden Einheiten der Formel IV,

$a_{312)}$ 15 bis 50 mol-%, bezogen auf die Summe $a_{311)}$ + $a_{312)}$ + $a_{314)}$, wiederkehrenden Einheiten der Formel V, und

$a_{314)}$ 25 bis 65 mol-%, bezogen auf die Summe $a_{311)}$ + $a_{312)}$ + $a_{314)}$, wiederkehrenden Einheiten der Formel XI,

wobei das molare Verhältnis der Komponenten $a_{2)}$ : $a_{3)}$ im Bereich von 0,9 = 1 bis 1,1 = 1 liegt.

**4.** Hochtemperaturbeständige Blockcopolykondensate nach Anspruch 1, dadurch gekennzeichnet, daß die vollaromatischen thermotropen Polyesterblöcke A) aufgebaut sind aus

$a_{1)}$ 10 bis 84 mol-% wiederkehrenden Einheiten der Formel I

$a_{2)}$ 8 bis 45 mol-% ein Mischung aus

$a_{21)}$ 50 bis 100 mol-%, bezogen auf $a_{21)}$ + $a_{22)}$, wiederkehrenden Einheiten der Formel II und

$a_{22)}$ 0 bis 50 mol-%, bezogen auf $a_{21)}$ + $a_{22)}$, wiederkehrenden Einheiten der Formel III, und

$a_{3)}$ 8 bis 45 mol-% einer Mischung aus

$a_{312)}$ 25 bis 60 mol-%, bezogen auf die Summe $a_{312)}$ + $a_{313)}$, wiederkehrenden Einheiten der Formel V,

$a_{313)}$ 40 bis 75 mol-%, bezogen auf die Summe $a_{312)}$ + $a_{313)}$, wiederkehrenden Einheiten der Formel VI,

wobei das molare Verhältnis der Komponenten $a_{2)}$ : $a_{3)}$ im Bereich von 0,9 = 1 bis 1,1 = 1 liegt.

**5.** Hochtemperaturbeständige Blockcopolykondensate nach Anspruch 1, dadurch gekennzeichnet, daß die vollaromatischen thermotropen Polyesterblöcke A) aufgebaut sind aus

$a_{1)}$ 10 bis 70 mol-% wiederkehrenden Einheiten der Formel I

$a_{2)}$ 15 bis 45 mol-% wiederkehrenden Einheiten der Formel II, und

$a_{3)}$ 15 bis 45 mol-% einer Mischung aus

$a_{313)}$ 30 bis 75 mol-%, bezogen auf die Summe $a_{313)}$ + $a_{315)}$, wiederkehrenden Einheiten der Formel VI und

$a_{315)}$ 25 bis 70 mol-%, bezogen auf die Summe $a_{313)}$ + $a_{315)}$, wiederkehrenden Einheiten der Formel VIII,

wobei das molare Verhältnis der Komponenten $a_{2)}$ : $a_{3)}$ im Bereich von 0,9 = 1 bis 1,1 = 1 liegt.

**6.** Hochtemperaturbeständige Blockcopolykondensate nach den Ansprüchen 1 bis 5, dadurch gekennzeichnet, daß die Polyimidblöcke B) aufgebaut sind aus Einheiten der allgemeinen Formel XIV, in denen

U für

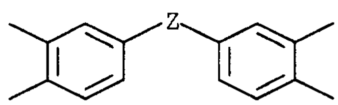 ,

und

Z für —O— , —CO— oder

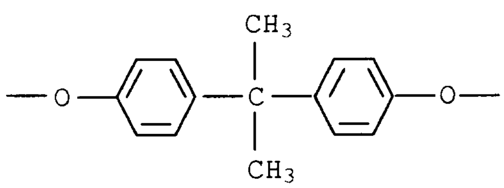

steht.

**7.** Hochtemperaturbeständige Blockcopolykondensate nach den Ansprüchen 1 bis 6, dadurch gekennzeichnet, daß die Polyimidblöcke B) aufgebaut sind aus Einheiten der allgemeinen Formel XIV, in denen

V für m-Phenylen, p-Phenylen,

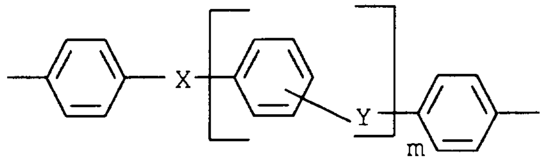

oder 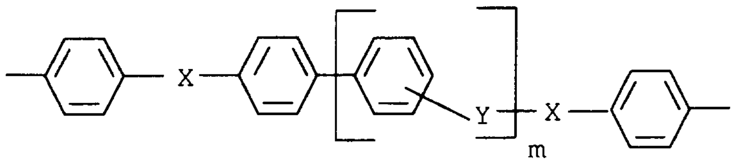

steht,

X für —O— , —CO— oder $—SO_2—$

Y für —O— oder $—SO_2—$

und

m 0 oder 1 bedeutet

8. Verfahren zur Herstellung von hochtemperaturbeständigen Blockcopolykondensaten gemäß den Ansprüchen 1 bis 7, dadurch gekennzeichnet, daß man unter Zusatz eines Lösevermittlers arbeitet.

9. Verwendung der hochtemperaturbeständigen Blockcopolykondensate gemäß den Ansprüchen 1 bis 7 zur Herstellung von Fasern, Folien und Formkörpern.

10. Fasern, Folien und Formkörper, erhältlich aus hochtemperaturbeständigen Blockcopolykondensaten gemäß den Ansprüchen 1 bis 7 als wesentliche Komponente.